# FASCICULE DE BREVET EUROPEEN

(11) **EP 0 392 906 B1**
(45) Date de publication et mention de la délivrance du brevet: **20.09.1995**
(21) Numéro de dépôt: 90400950.3
(22) Date de dépôt: 06.04.1990
(51) Int. Cl.: G11B 5/33, G11B 5/49

(54) **Tête magnétique statique de lecture**
Statischer Lese-Magnetkopf
Static magnetic read head

(30) Priorité: 14.04.1989 FR 8904965
(43) Date de publication de la demande: 17.10.1990
(73) Titulaire: THOMSON-CSF, 75008 Paris (FR)
(72) Inventeur: Lehureau, Jean-Claude, F-92045 Paris la Défense (FR)
(74) Mandataire: Chaverneff, Vladimir

(56) Documents cités:
- WO-A-82/03938
- FR-A- 2 090 196
- US-A- 2 762 861
- US-A- 3 626 396
- US-A- 3 662 361
- US-A- 4 751 598
- IBM TECHNICAL DISCLOSURE BULLETIN. vol. 9, no. 2, juillet 1966, ARMONK N.Y. USA page 124 J.R. MORRISON et al.: "READBACK HEAD FOR HIGH-DENSITY RECORDING"
- IBM TECHNICAL DISCLOSURE BULLETIN. vol. 3, no. 11, avril 1961, ARMONK N.Y. USA page 18 J. FLORA et al.: "MULTITRACK PROBE TYPE RECORDING TRANSDUCER"
- PATENT ABSTRACTS OF JAPAN vol. 10, no. 195 (P-475)(2251) 09 juillet 1986, & JP-A- 61 039914 (KONISHIROKU PHOTO IND CO LTD) 26 février 1986,

## Description

La présente invention se rapporte à une tête magnétique statique de lecture.

Pour écrire des informations telles que des signaux vidéo sur une bande magnétique, et pour lire ensuite la bande enregistrée, on utilise généralement une tête magnétique rotative (de type "héliscan") permettant d'enregistrer un grand nombre de pistes, puis de les relire. Une telle tête magnétique présente des difficultés de fabrication et de mise en place du fait qu'elle est mobile et doit être positionnée avec une grande précision.

Pour la lecture des bandes ainsi enregistrées, on connaît également des transducteurs magnéto-optiques associés à des rétines en technique CCD. Ces systèmes de lecture nécessitent également un positionnement très précis de leurs constituants.

On connaît d'après les documents US-A-3 662 361 et FR-A-2 090 196 des têtes statiques de lecture ou d'écriture de bandes magnétiques, dont la structure est relativement complexe à réaliser.

La présente invention a pour objet une tête de lecture statique permettant la lecture des bandes magnétiques enregistrées de façon conventionnelle, qui soit de faible prix de revient et facile à implanter.

La tête de lecture conforme à l'invention est une tête magnétique statique de lecture de bande magnétique, qui est caractérisée par le fait qu'elle comporte une plaque de base en matériau à faible perméabilité magnétique relative, dans laquelle est pratiqué un réseau sensiblement orthogonal de rainures en lignes et en colonnes, un groupe de conducteurs de lignes et un groupe de conducteurs de colonnes étant disposés dans ces rainures, cette plaque de base étant recouverte d'une plaque de même surface, en matériau amagnétique, sur laquelle est déposé un réseau de pièces polaires formant à chaque fois une tête élémentaire à entrefer, toutes les têtes étant parallèles à l'une des diagonales de la plaque sur laquelle elles sont déposées, ces pièces étant en matériau à forte perméabilité magnétique relative et joignant les coins en vis-à-vis de pavés délimités par lesdites rainures et disposés symétriquement par rapport au croisement d'une rainure de ligne et d'une rainure de colonne, et par le fait que l'un des groupes de conducteurs est alimenté en courant continu auquel sont superposés des signaux à haute fréquence, et que chaque fil de l'autre groupe de conducteurs est relié à un circuit de détection.

Le procédé d'utilisation de tête magnétique de l'invention est caractérisé par les étapes suivantes :
- on alimente en courant continu l'un des groupes de conducteurs (L1, L2, ... ou C1, C2, ...)
- on superpose des signaux à haute fréquence audit courant continu
- on détecte sur l'autre groupe de conducteurs les signaux apparaissant sur ces conducteurs qui captent les variations de flux passant par les pièces polaires (5) de la tête lors de la lecture de la bande magnétique.

Selon un mode particulier de réalisation de l'invention, la tête magnétique est reliée à un circuit de balayage de lignes et d'exploration de bande.

Selon encore un mode particulier de réalisation de l'invention, lesdits fils forment un réseau sensiblement orthogonal, et la partie linéaire du circuit magnétique présente une symétrie, l'élément non linéaire de ce circuit magnétique étant oblique par rapport aux fils du réseau.

La présente invention sera mieux comprise à la lecture de la description détaillée d'un mode de réalisation, pris à titre d'exemple non limitatif, et illustré par le dessin annexé, sur lequel :
- la figure 1 est une vue partielle en perspective d'une tête magnétique ;
- la figure 2 est une vue en coupe simplifiée d'une tête élémentaire conforme à l'invention ;
- la figure 3 est une vue schématique en plan de la tête élémentaire de la figure 1 avec quelques fils de ligne et de colonnes avec lesquels elle coopère ;
- la figure 4 est un diagramme de tension d'excitation d'une ligne de la tête de la figure 1 ;
- la figure 5 est une vue schématique montrant le positionnement d'une tête conforme à l'invention par rapport à une bande magnétique qu'elle lit, et
- la figure 6 est un chronogramme de quelques signaux apparaissant dans la tête de la figure 4.

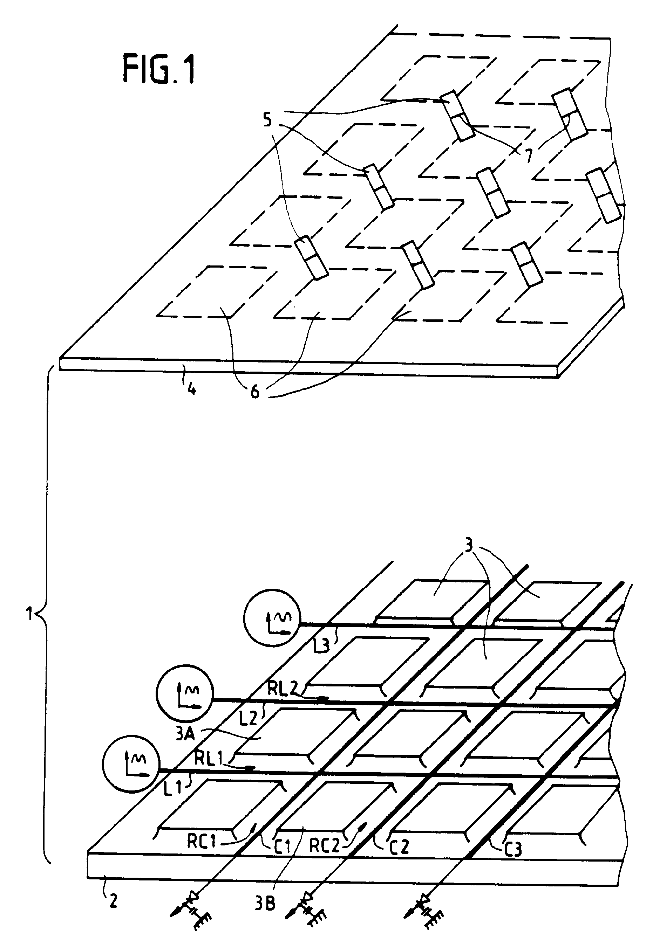

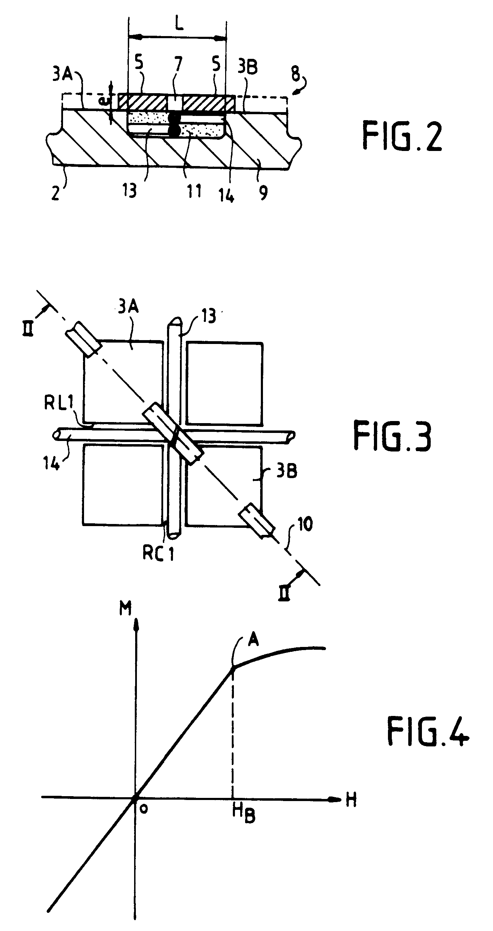

La tête magnétique 1 de lecture conforme à l'invention est formée d'un réseau dense de micro-têtes (têtes élémentaires) de lecture disposées en matrice. Cette matrice peut par exemple comporter 16 lignes de 16 micro-têtes chacune, pour lire une bande magnétique vidéo. Cette tête 1 a par exemple une topologie telle que décrite dans la Demande de Brevet français n° 88 05592 publiée le 3.11.89 sous le numéro de publication FR-A-2 630 853 et ne faisant donc pas partie de l'état de la technique au sens de l'article 54(2) EPC. et représentée en figure 1. Cependant la réalisation des micro-têtes et le réseau de fils sont différents. En effet, selon la demande précitée, les extensions (références 17₁, 18₁ dans cette demande) des pièces polaires (17,18) sont généralement réalisées avec le même matériau que ces pièces polaires. Par contre, selon la présente invention, cette tête 1 comporte essentiellement, pour le mode de réalisation représenté, une plaque de base 2 en matériau à faible perméabilité magnétique relative, tel que du ferrite. Dans cette plaque de base, on pratique un réseau sensiblement orthogonal de rainures en lignes (RL1,RL2...) et en colonnes (RC1,RC2...). Des conducteurs de lignes L1,L2,... et de colonnes C1, C2,... sont disposés dans ces rainures. Ce réseau de rainures détermine sur la plaque 2 des pavés 3 dont la face supérieure est sensiblement carrée, de préférence légèrement trapézoïdale pour les raisons expliquées ci-dessous. La plaque 2 est recouverte d'une plaque 4 de même surface en matériau amagnétique, par exemple du verre, sur laquelle est déposé un réseau de pièces polaires 5 en matériau à forte perméabilité relative, tel que du "Permalloy" ou du "Sendust". Ces pièces polaires 5 ont la forme de rectangles tous parallèles à l'une des diagonales de la plaque 4, joignant les coins en vis-à-vis de pavés 3 disposés symétriquement par rapport au croisement d'une rainure de ligne et d'une rainure de colonne (comme par exemple les pavés 3A,3B). Comme représenté en traits interrompus sur la plaque 4, on peut déposer sur cette plaque 4 des pièces polaires 6 ayant la même forme et la même surface (ou une surface légèrement plus grande) que les pavés 3 par rapport auxquels elles sont centrées, les pièces 6 étant réalisées avec le même matériau que les pièces 5 et en même temps que ces dernières. Selon un autre mode de réalisation représenté en figures 2 et 3, on dispose les conducteurs de lignes et de colonnes dans les rainures correspondantes de la plaque 2 et on remplit ces rainures d'un matériau amagnétique (résine, verre...). On polit ensuite la face supérieure de la plaque 2, et on y dépose directement les pièces 5. Les pièces 5 sont coupées en leur milieu par un entrefer 7.

Ainsi que représenté en détail sur la figure 2, chaque micro-tête 8 a un circuit magnétique dont le corps 9 est constitué par deux pavés 3A,3B (tels que définis ci-dessus et ayant une de leurs diagonales confondue avec le prolongement de l'autre : ligne de coupe 10 sur la figure 3) et la partie correspondante de la plaque 2. Ce corps 9 est réalisé en un matériau à faible réluctance, par exemple du ferrite. Ce corps 9 a à peu près la forme d'un "U" dont l'ouverture, d'une largeur d'environ 30 micromètres à 1 mm, peut être remplie d'un matériau amagnétique 11, par exemple du verre. La face supérieure du corps 9 ainsi rempli est polie et sa partie centrale (à savoir la face supérieure du matériau 11 et des coins en vis-à-vis des pavés 3A,3B) est recouverte d'une mince couche 5 (par exemple d'environ 0,1 µm d'épaisseur) de matériau à forte réluctance magnétique, par exemple du "permalloy". Cette couche 5 a par exemple une forme de rectangle coupé en son milieu par l'entrefer 7. L'entrefer 7 a une largeur d'environ 0,3 par exemple. Comme représenté en traits interrompus en figure 2, on peut recouvrir la totalité de la surface des pavés 3A,3B avec ce matérlau à forte réluctance, ce qui ne nuit pratiquement pas au fonctionnement de la micro-tête, puisque la condition importante à respecter est que la partie de la couche située entre les branches dudit "U" ait une faible largeur par rapport aux dimensions des pavés 3.

Dans la cavité 12 entourée par le corps 3, passent un conducteur de colonne 13 et un conducteur de ligne 14.

De préférence, les conducteurs de lignes sont sensiblement orthogonaux aux conducteurs de colonnes, au moins dans la traversée de chaque circuit magnétique, c'est-à-dire dans la zone de leur croisement mutuel.

Si l'on appelle L la longueur de la partie de la couche 5 située sur le matériau 11, µr sa perméabilité relative, et e son épaisseur, L doit être sensiblement égale au produit µr.e. Si par exemple µr=1000 et e=0, 1 µm, on trouve pour L une valeur de 100 µm.

Une partie des fils, par exemple les fils de lignes, servent à produire l'excitation des micro-têtes individuelles. A cet effet, on leur applique une polarisation de courant continu I_{B} à laquelle on superpose, pour les lignes à exciter, une composante "RF", c'est-à-dire un train d'ondes à très haute fréquence. La fréquence de ce train d'ondes est choisie de façon que pendant une période d'excitation (ou de validation) des lignes en question on envoie au moins une dizaine d'alternances de ces ondes. Comme on peut le voir d'après la caractéristique M= f(H) (M étant l'énergie de magnétisation des éléments non linéaires 5, et H le champ) d'un matériau à propriétés magnétiques non linéaires tel que le "Permalloy", excité selon son axe difficile, il faut déplacer le point de fonctionnement d'un tel matériau vers une zone à faible rayon de courbure (zone du point A sur la figure 4) pour laquelle la sensibilité des circuits magnétiques de l'invention est la plus élevée. Le déplacement du point de fonctionnement est obtenu par ledit courant continu IB de polarisation, donnant un champ H_{B}.

Chaque fil de colonne est relié à un circuit de détection recueillant le signal lu sur la bande magnétique, ce qui est possible grâce au fait que les pièces 5 sont obliques par rapport aux fils de colonnes qui peuvent ainsi capter les variations de flux passant par ces pièces.

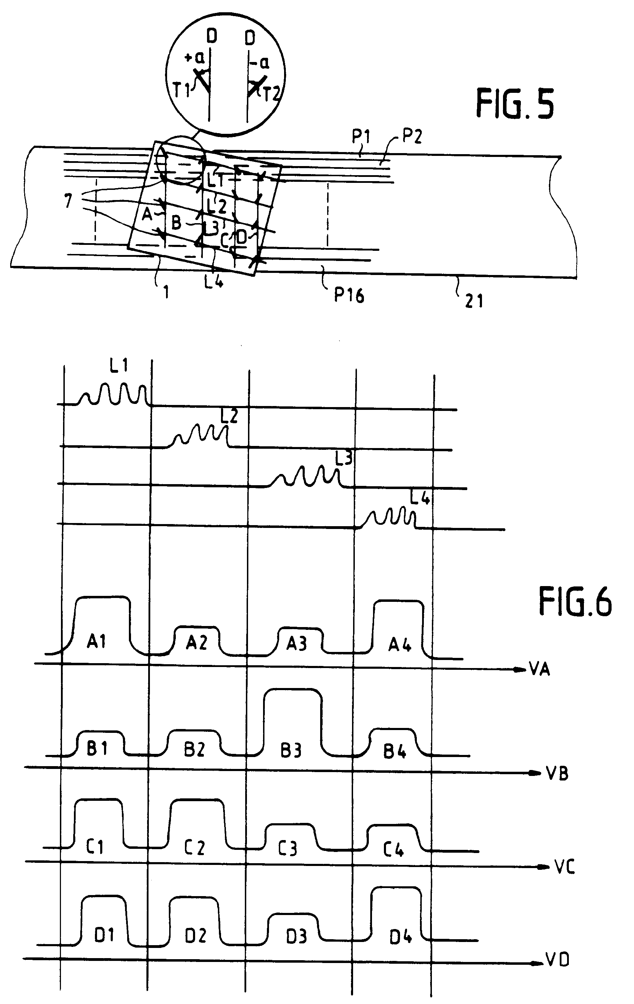

De façon avantageuse, comme représenté en figure 5, une tête magnétique 1 est disposée de façon légèrement oblique (quelques degrés) par rapport à la direction de défilement de la bande magnétique 21, de façon à pouvoir lire un nombre maximal de pistes de cette bande sans réduire pour autant de façon irréaliste (en dessous de quelques dizaines de microns) le pas des micro-têtes de la tête 1.

Pour simplifier les explications, on suppose que la tête 1 comporte 4 lignes (L1 à L4) et 4 colonnes (A à D) de micro-têtes.

La tête 1 est disposée de telle façon que les micro-têtes (seuls les entrefers 7 de ces micro-têtes sont représentés en figure 5) coopèrent avec les pistes successives de la manière suivante, si l'on appelle P1 la première piste et P16 la dernière : la piste P1 coopère avec la première micro-tête (de la ligne L1) de la première colonne (A), la piste P2 avec la deuxième micro-tête (de la ligne L2) de la première colonne,..., la piste P4 avec la quatrième micro-tête (ligne L4) de la première colonne, la piste P5 avec la première micro-tête de la deuxième colonne (B), et ainsi de suite jusqu'à à la piste P16 qui coopère avec la quatrième micro-tête de la quatrième colonne. De façon avantageuse, les différentes lignes L1 à L4 sont perpendiculaires à la direction de défilement de la bande magnétique, afin de standardiser différents types de têtes. De façon avantageuse, les entrefers des micro-têtes correspondant à des pistes successives sont alternativement orientés selon une première et une seconde directions, ces deux directions étant sensiblement symétriques par rapport à une perpendiculaire à la direction de défilement de la bande, et faisant par rapport à cette perpendiculaire un angle d'environ 10 à 45° (voir par exemple dans la vue de détail déportée de la figure 5 les deux premières micro-têtes T1 et T2 qui font respectivement un angle +a et un angle -a par rapport à la droite D qui est perpendiculaire à la direction de défilement de la bande).

Pour effectuer le multiplexage des micro-têtes, on envoie cycliquement des salves d'oscillations RF aux lignes L1 à L4, comme représenté en haut de la figure 6. Sur les colonnes A à D, on récupère, après détection, les signaux lus par les micro-têtes respectives : A1 à A4 pour la colonne A, B1 à B4 pour la colonne B, etc (A1 étant la micro-tête de la colonne A sur la ligne L1,...). Il suffit ensuite de traiter dans l'ordre convenable les signaux des différentes colonnes.

Selon un aspect avantageux de réalisation de l'invention, on supprime le courant I_{B} des lignes non excitées. Ainsi, même s'il y a induction non négligeable du signal RF par couplages parasites sur les lignes non excitées, ce signal RF ne peut provoquer la lecture par les micro-têtes des lignes non excitées, car le gain des micro-têtes pour M = 0 (figure 4) est très inférieur à celui pour M = H_{B}, et peut même être presque nul.

Selon encore un autre aspect avantageux de réalisation de l'invention, on augmente la sensibilité des micro-têtes en réglant la fréquence du signal RF à une valeur proche de la fréquence de résonance du circuit réparti formé par la ligne correspondante et les micro-têtes qui la bordent.

Selon une variante de réalisation de l'invention, on excite simultanément toutes les lignes, mais à des fréquences différentes, et on dispose des filtres correspondants sur les différentes colonnes.

## Revendications

1. Tête magnétique statique de lecture de bande magnétique, caractérisée par le fait qu'elle comporte une plaque de base (2) en matériau à faible perméabilité magnétique relative, dans laquelle est pratiqué un réseau sensiblement orthogonal de rainures en lignes (RL1, RL2, ...) et en colonnes (RC1, RC2, ...), un groupe de conducteurs de lignes (L1, L2, ...) et un groupe de conducteurs de colonnes (C1, C2, ...) étant disposés dans ces rainures, cette plaque de base étant recouverte d'une plaque (4) de même surface, en matériau amagnétique, sur laquelle est déposé un réseau de pièces polaires (5) formant à chaque fois une tête élémentaire à entrefer (7), toutes les têtes étant parallèles à l'une des diagonales de la plaque sur laquelle elles sont déposées, ces pièces étant en matériau à forte perméabilité magnétique relative et joignant les coins en vis-à-vis de pavés (3) délimités par lesdites rainures et disposés symétriquement par rapport au croisement d'une rainure de ligne et d'une rainure de colonne.

2. Tête selon la revendication 1, caractérisée par le fait qu'elle est reliée à un circuit de balayage de lignes et d'exploration de bandes.

3. Tête selon l'une des revendications précédentes, caractérisée par le fait que lesdits groupes de fils forment un réseau sensiblement orthogonal et que l'entrefer de chaque tête élémentaire est oblique par rapport aux fils du réseau.

4. Tête selon l'une des revendications précédentes, caractérisée par le fait que la plaque de base de chaque circuit magnétique est en un matériau à faible perméabilité relative tel que le ferrite, et que ses pièces polaires sont en un matériau à forte perméabilité magnétique tel que le Permalloy ou le Sendust.

5. Tête selon l'une des revendications précédentes, caractérisée par le fait que la longueur (L) des pièces polaires (5) située sur l'entrefer (11) des pavés est sensiblement égale au produit de la perméabilité relative de ces parties non linéaires par leur épaisseur.

6. Tête selon l'une des revendications précédentes, à réseau de têtes élémentaires disposées en lignes et colonnes, caractérisée par le fait que les lignes de têtes élémentaires sont obliques par rapport à la direction de défilement de la bande à lire.

7. Tête selon la revendication 6, caractérisée par le fait que les colonnes de têtes élémentaires sont perpendiculaires à la direction de défilement de la bande.

8. Tête selon l'une des revendications précédentes, caractérisée par le fait que les entrefers des têtes élémentaires correspondant à des pistes successives de la bande à lire sont alternativement orientés selon une première et une seconde directions (+a, -a), ces deux directions étant sensiblement symétriques par rapport à une perpendiculaire à la direction de défilement de la bande.

9. Tête selon la revendication 8, caractérisée par le fait que les deux dites directions font un angle d'environ 10 à 45° par rapport à ladite perpendiculaire.

10. Procédé de lecture d'une bande magnétique utilisant une tête magnétique statique de lecture selon l'une des revendications 1 à 13 comprenant les étapes suivantes :
- on alimente en courant continu l'un des groupes de conducteurs (L1, L2, ... ou C1, C2, ...)
- on superpose des signaux à haute fréquence audit courant continu
- on détecte sur l'autre groupe de conducteurs les signaux apparaissant sur ces conducteurs qui captent les variations de flux passant par les pièces polaires (5) de la tête lors de la lecture de la bande magnétique.

11. Procédé selon la revendication 10, caractérisé par le fait que les signaux à haute fréquence sont des trains d'ondes dont la fréquence est telle que pendant une période d'excitation des lignes excitées on envoie au moins une dizaine d'alternances de ces ondes.

12. Procédé selon l'une des revendications 10 ou 11, caractérisé par le fait que le courant continu n'est envoyé qu'aux fils d'excitation des têtes élémentaires à exciter.

13. Procédé selon l'une des revendications 10 à 12, caractérisé par le fait que la fréquence du signal à haute fréquence a une valeur proche de la fréquence de résonance du circuit réparti formé par la ligne correspondante et les têtes élémentaires qui la bordent.

14. Procédé selon l'une des revendications 10 à 13, caractérisé par le fait que l'on excite simultanément toutes les lignes de fils d'excitation, mais à des fréquences différentes, et on dispose des filtres correspondants sur les différentes colonnes.

## Patentansprüche

1. Statischer Magnetband-Lesemagnetkopf, gekennzeichnet durch eine Grundplatte (2) aus einem Material mit schwacher relativer magnetischer Permeabilität, in der ein im wesentlichen orthogonales Gitter aus Nuten in Zeilen (RL1, RL2, ...) und Spalten (RC1, RC2, ...) angebracht sind, wobei eine Gruppe von Zeilenleitern (L1, L2, ...) und eine Gruppe von Spaltenleitern (C1, C2, ...) in den Nuten angeordnet sind, wobei die Grundplatte durch eine Platte (4) der gleichen Fläche aus nichtmagnetischem Material gedeckt ist, auf der eine Matrix aus Polstücken (5) angebracht ist, die jeweils einen Elementarkopf mit Luftspalt (7) bilden, wobei alle diese Köpfe parallel zu einer der Diagonalen der Platte verlaufen, auf der sie angeordnet sind, wobei diese Polstücke aus einem Material mit starker relativer magnetischer Permeabilität bestehen und die einander gegenüberliegenden Ecken von Blöcken (3) verbinden, die durch die Nuten begrenzt sind und symmetrisch bezüglich der Überkreuzung einer Zeilennut und einer Spaltennut angeordnet sind.

2. Kopf nach Anspruch 1, dadurch gekennzeichnet, daß er an eine Schaltung zum Abtasten der Zeilen und zum Abtasten der Bänder angeschlossen ist.

3. Kopf nach einem der vorhergehenden Ansprüche, dadurch gekennzeichnet, daß die Gruppen von Drähten, die ein Gitter bilden, im wesentlichen orthogonal verlaufen und daß der Luftspalt jedes Elementarkopfs schräg bezüglich der Drähte des Gitters verläuft.

4. Kopf nach einem der vorhergehenden Ansprüche, dadurch gekennzeichnet, daß die Grundplatte jedes Magnetkreises aus einem Material mit schwacher relativer Permeabilität wie Ferrit besteht und daß die Polstücke aus einem Material mit starker magnetischer Permeabilität wie Permalloy oder Sendust bestehen.

5. Kopf nach einem der vorhergehenden Ansprüche, dadurch gekennzeichnet, daß die Länge (L) der über dem Luftspalt (11) der Blöcke liegenden Polstücke (5) im wesentlichen gleich dem Produkt aus der relativen Permeabilität dieser nichtlinearen Teile und ihrer Dicke ist.

6. Kopf nach einem der vorhergehenden Ansprüche mit einem Netz aus zeilen- und spaltenweise angeordneten Elementarköpfen, dadurch gekennzeichnet, daß die Zeilen der Elementarköpfe schräg bezüglich der Richtung der Vorbeibewegung des zu lesenden Bandes verlaufen.

7. Kopf nach Anspruch 6, dadurch gekennzeichnet, daß die Spalten der Elementarköpfe senkrecht zur Richtung der Vorbeibewegung des Bandes verlaufen.

8. Verfahren nach einem der vorhergehenden Ansprüche, dadurch gekennzeichnet, daß die Luftspalte der Elementarköpfe entsprechend den aufeinanderfolgenden Spuren des zu lesenden Bandes abwechselnd gemäß einer ersten und einer zweiten Richtung (+a, -a) ausgerichtet sind, wobei diese zwei Richtungen im wesentlichen symmetrisch bezüglich einer Senkrechten zur Richtung der Vorbeibewegung des Bandes verlaufen.

9. Kopf nach Anspruch 8, dadurch gekennzeichnet, daß die zwei Richtungen einen Winkel von etwa 10 bis 45° bezüglich der Senkrechten bilden.

10. Verfahren zum Lesen eines Magnetbandes unter Verwendung eines statischen Lese-Magnetkopfs nach einem der Ansprüche 1 bis 13, enthaltend die folgenden Stufen:
- eine der Leitergruppen (L1, L2, ... oder C1, C2, ...) wird mit Gleichstrom gespeist,
- dem Gleichstrom werden Hochfrequenzsignale überlagert,
- an der anderen Gruppe von Leitern werden die an diesen Leitern erscheinenden Signale erfaßt, die die Änderungen des durch die Polstücke (5) des Kopfs verlaufenden Flusses beim Lesen des Magnetbandes aufnehmen.

11. Verfahren nach Anspruch 10, dadurch gekennzeichnet, daß die Hochfrequenzsignale Wellenzüge mit einer solchen Frequenz sind, daß während einer Anregungsperiode der angeregten Zeilen wenigstens zehn Halbperioden dieser Wellen übertragen werden.

12. Verfahren nach einem der Ansprüche 10 oder 11, dadurch gekennzeichnet, daß der Gleichstrom nur an die Anregungsdrähte von anzuregenden Elementarköpfen angelegt wird.

13. Verfahren nach einem der Ansprüche 10 bis 12, dadurch gekennzeichnet, daß die Frequenz des Hochfrequenzsignals einen Wert hat, der nahe der Resonanzfrequenz der von der entsprechenden Leitung und den an sie angrenzenden Elementarköpfen gebildeten verteilten Schaltung liegt.

14. Verfahren nach einem der Ansprüche 10 bis 13, dadurch gekennzeichnet, daß alle Zeilen der Anregungsdrähte gleichzeitig, aber mit unterschiedlichen Frequenzen, angeregt werden und daß an den verschiedenen Spalten entsprechende Filter angebracht werden.

## Claims

1. Static magnetic read head for magnetic tape, characterized in that it includes a base plate (2) made of material with a low relative magnetic permeability, in which a substantially orthogonal network of grooves is formed in rows (RL1, RL2, ...) and in columns (RC1, RC2, ...), a group of row conductors (L1, L2, ...) and a group of column conductors (C1, C2, ...) being arranged in these grooves, this base plate being covered by a plate (4) with the same surface area, made of non-magnetic material, on which is deposited a network of pole pieces (5) forming, in every instance, an elementary head with a gap (7), all the heads being parallel to one of the diagonals of the plate on which they are deposited, these pieces being made of a material with a high relative magnetic permeability and joining the opposing corners of blocks (3) which are delimited by the said grooves and are arranged symmetrically with respect to the intersection of a row groove and of a column groove.

2. Head according to Claim 1, characterized in that it is linked to a line-sweeping and tape-scanning circuit.

3. Head according to one of the preceding claims, characterized in that the said groups of wires form a substantially orthogonal network and in that the gap of each elementary head is oblique with respect to the wires of the network.

4. Head according to one of the preceding claims, characterized in that the base plate of each magnetic circuit is made of a material with a low relative permeability such as ferrite, and in that its pole pieces are made of a material with a high magnetic permeability such as Permalloy or Sendust.

5. Head according to one of the preceding claims, characterized in that the length (L) of the pole pieces (5) situated on the gap (11) of the blocks is substantially equal to the product of the relative permeability of these non-linear parts and their thickness.

6. Head according to one of the preceding claims, with a network of elementary heads arranged in rows and columns, characterized in that the rows of elementary heads are oblique with respect to the direction of crossing movement of the tape to be read.

7. Head according to Claim 6, characterized in that the columns of elementary heads are perpendicular to the direction of crossing movement of the tape.

8. Head according to one of the preceding claims, characterized in that the gaps of the elementary heads corresponding to successive tracks of the tape to be read are oriented alternately along a first and a second direction (+a, -a), these two directions being substantially symmetric with respect to a perpendicular to the direction of crossing movement of the tape.

9. Head according to Claim 8, characterized in that the two said directions form an angle of about 10 to 45° with respect to the said perpendicular.

10. Method of reading a magnetic tape using a static magnetic read head according to one of Claims 1 to 13, comprising the following stages:
- one of the groups of conductors (L1, L2, .... or C1, C2, ...) is fed with direct current
- high-frequency signals are superimposed on the said direct current
- the signals appearing on the other group of conductors, which pick up the flux variations passing through the pole pieces (5) of the head, are detected on these conductors upon reading the magnetic tape.

11. Method according to Claim 10, characterized in that the high-frequency signals are wave trains the frequency of which is such that, during a period of excitation of the excited lines, at least about 10 alternations of these waves are sent.

12. Method according to either of Claims 10 and 11, characterized in that the direct current is sent only to the excitation wires of the elementary heads to be excited.

13. Method according to one of Claims 10 to 12, characterized in that the frequency of the high-frequency signal has a value close to the resonance frequency of the distributed circuit formed by the corresponding row and the elementary heads which border it.

14. Method according to one of Claims 10 to 13, characterized in that all the rows of excitation wires are excited simultaneously, but at different frequencies, and corresponding filters are arranged on the various columns.
